# EUROPEAN PATENT APPLICATION

(11) **EP 4 387 372 A1**
(43) Date of publication of application: **19.06.2024**
(21) Application number: 22855416.8
(22) Date of filing: 09.08.2022
(51) Int. Cl.: H04W 76/10

(54) **ASSISTED SENSING METHOD AND APPARATUS, NETWORK SIDE DEVICE, AND TERMINAL**

(30) Priority: 13.08.2021 CN 202110930340
(71) Applicant: Vivo Mobile Communication Co., Ltd., Dongguan, Guangdong 523863 (CN)
(72) Inventor: KANG, Yanchao, Dongguan, Guangdong 523863 (CN); QIN, Fei, Dongguan, Guangdong 523863 (CN)
(74) Representative: Murgitroyd & Company
(86) International application number: PCT/CN2022/111060
(87) International publication number: WO 2023/016435

(57) **Abstract**

This application discloses a sensing assistance method and apparatus, a network side device, and a terminal, and pertains to the field of mobile communication. The sensing assistance method in embodiments of this application includes: receiving, by a network side node, a first message from a terminal, where the first message is used to request to register the terminal as a sensing assistance node; and responding, by the network side node, a second message to the terminal based on the first message.

## Description

### CROSS-REFERENCE TO RELATED APPLICATION

The present invention claims priority to Chinese Patent Application No. 202110930340.4, filed with the China National Intellectual Property Administration on August 13, 2021 and entitled "SENSING ASSISTANCE METHOD AND APPARATUS, NETWORK SIDE DEVICE, AND TERMINAL", which is incorporated herein by reference in its entirety.

### TECHNICAL FIELD

This application pertains to the field of mobile communication technologies, and specifically relates to a sensing assistance method and apparatus, a network side device, and a terminal.

### BACKGROUND

According to an architecture related to a positioning service in a 5G system, a location management function (Location Management Function, LMF) node is a location management functional entity in a 5G network, and may return, based on a request of a trusted terminal, a network function, or a third-party server, corresponding location service information for the trusted terminal, the network function, or the third-party server. Currently, the 5G system only supports a positioning technology, but does not support a sensing technology.

As a research focus of the 5G system or a 6G system, integration of sensing and wireless communication is mainly implemented by using a base station or a terminal as a sensing node. Once the base station is deployed, a location of the base station is fixed, a coverage area is large, a distance between the base station and a sensed target terminal is large, an environment change is complex, and the base station serves as a sensing node, which is difficult to support a high-precision sensing requirement. A power and a capability of the terminal are limited, and the terminal often moves, which is also difficult to support the high-precision sensing requirement.

It can be learned that, because the base station and the terminal serve as sensing nodes to implement integration of sensing and wireless communication, the high-precision sensing requirement cannot be met.

### SUMMARY

Embodiments of this application provide a sensing assistance method and apparatus, a network side device, and a terminal, to resolve a problem that integration of sensing and wireless communication cannot meet a high-precision sensing requirement.

According to a first aspect, a sensing assistance method is provided. The method is applied to a network side node and includes:
The network side node receives a first message from a terminal, where the first message is used to request to register the terminal as a sensing assistance node; and
the network side node responds a second message to the terminal based on the first message.

According to a second aspect, a sensing assistance apparatus is provided, including:
a receiving module, configured to receive a first message from a terminal, where the first message is used to request to register the terminal as a sensing assistance node; and
an execution module, configured to respond a second message to the terminal based on the first message.

According to a third aspect, a sensing assistance method is provided. The method is applied to a terminal and includes:
The terminal sends a first message to a network side node, where the first message is used to request to register the terminal as a sensing assistance node; and
the terminal receives a second message from the network side node.

According to a fourth aspect, a sensing assistance apparatus is provided, including:
a request module, configured to send a first message to a network side node, where the first message is used to request to register a terminal as a sensing assistance node; and
a configuration module, configured to receive a second message responded by the network side node.

According to a fifth aspect, a network side device is provided. The network side device includes a processor, a memory, and a program or an instruction stored in the memory and executable on the processor, where when the program or the instruction is executed by the processor, the steps of the method in the first aspect are implemented.

According to a sixth aspect, a terminal is provided. The terminal includes a processor, a memory, and a program or an instruction stored in the memory and executable on the processor, where when the program or the instruction is executed by the processor, the steps of the method in the third aspect are implemented.

According to a seventh aspect, a readable storage medium is provided. The readable storage medium stores a program or an instruction, where when the program or the instruction is executed by a processor, the steps of the method in the first aspect or the steps of the method in the third aspect are implemented.

According to an eighth aspect, a chip is provided. The chip includes a processor and a communication interface, the communication interface is coupled to the processor, and the processor is configured to run a program or an instruction, to implement the method in the first aspect or the method in the third aspect.

According to a ninth aspect, a computer program/program product is provided. The computer program/program product is stored in a non-transitory storage medium, and the program/program product is executed by at least one processor to implement the steps of the method in the first aspect or the steps of the method in the third aspect.

In embodiments of this application, the network side node receives the first message from the terminal, where the first message is used to request to register the terminal as a sensing assistance node; and the network side node responds the second message to the terminal based on the first message, so that the terminal is registered as a network-authorized sensing assistance node. In this way, the sensing assistance node can perform configuration based on the received second message, and perform measurement and reporting work related to sensing assistance, further assisting a network to provide a high-precision sensing function service.

### BRIEF DESCRIPTION OF DRAWINGS

FIG. 1 is a schematic structural diagram of a wireless communication system to which an embodiment of this application can be applied;
FIG. 2 is a schematic flowchart of a sensing assistance method according to an embodiment of this application;
FIG. 3 is another schematic flowchart of a sensing assistance method according to an embodiment of this application;
FIG. 4 is another schematic flowchart of a sensing assistance method according to an embodiment of this application;
FIG. 5 is another schematic flowchart of a sensing assistance method according to an embodiment of this application;
FIG. 6 is another schematic flowchart of a sensing assistance method according to an embodiment of this application;
FIG. 7 is a schematic structural diagram of a sensing assistance apparatus according to an embodiment of this application;
FIG. 8 is another schematic flowchart of a sensing assistance method according to an embodiment of this application;
FIG. 9 is another schematic structural diagram of a sensing assistance apparatus according to an embodiment of this application;
FIG. 10 is a schematic structural diagram of a communication device according to an embodiment of this application;
FIG. 11 is a schematic structural diagram of a network side device according to an embodiment of this application; and
FIG. 12 is a schematic structural diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art according to the embodiments of this application shall fall within the protection scope of this application.

The terms "first", "second", and the like in this specification and claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of one type, and the number of objects is not limited. For example, there may be one or more first objects. In addition, in this specification and the claims, "and/or" represents at least one of connected objects, and a character "/" generally represents an "or" relationship between associated obj ects.

It should be noted that, the technologies described in the embodiments of this application are not limited to a Long Term Evolution (Long Term Evolution, LTE)/LTE-Advanced (LTE-Advanced, LTE-A) system, and may also be used in other wireless communication systems, for example, Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-Carrier Frequency-Division Multiple Access (Single-Carrier Frequency-Division Multiple Access, SC-FDMA), and another system. The terms "system" and "network" in the embodiments of this application are often used interchangeably. The technologies described may be applied to both the systems and the radio technologies mentioned above as well as to other systems and radio technologies. A New Radio (New Radio, NR) system is described below as an example, and the NR term is used in most of the following descriptions, although these technologies may also be applied to an application other than an application of the NR system, for example, a 6th Generation (6th Generation, 6G) communication system.

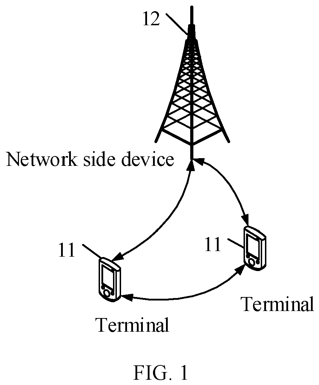

FIG. 1 is a schematic structural diagram of a wireless communication system to which an embodiment of this application can be applied. The wireless communication system includes terminals 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a smart watch, a bracelet, a headset, glasses, or the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

With reference to the accompanying drawings, a sensing assistance method provided in the embodiments of this application is described in detail by using some embodiments and application scenarios thereof.

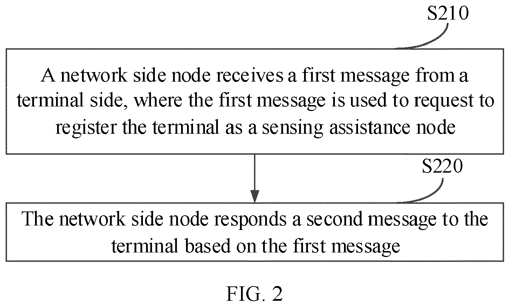

FIG. 2 is a schematic flowchart of a sensing assistance method according to an embodiment of this application. As shown in FIG. 2, an execution body of the method is a network side device, which may also be referred to as a network side node. The network side node may be an independent network function node, or may include a plurality of network function nodes. The method may be executed by software or hardware installed on the network function node. The method is implemented by the following steps.

Step S210: The network side node receives a first message from a terminal, where the first message is used to request to register the terminal as a sensing assistance node.

The sensing assistance node is a network-authorized sensing node, and is configured to assist a network to provide a high-precision sensing function service. The terminal sends the first message to the network side node, to request to register the terminal as a sensing assistance node.

In an implementation, when the terminal is not registered as a sensing assistance node, the first message sent by the terminal to the network side node is an initial registration message or a sensing registration message, for example, an initial registration message in a 5G system, or an initial registration message that carries a similar function in a 6G system.

In another implementation, when the terminal has been registered as a sensing assistance node, the first message sent by the terminal to the network side node is a registration update message or a sensing registration update message, for example, a mobility registration update message in a 5G system, or a mobility registration update message or a location management update message that carries a similar function in a 6G system. The registration update message may be sent based on mobility or periodicity.

Step S220: The network side node responds a second message to the terminal based on the first message.

Further, after receiving the first message, the network side node may first determine whether subscription information of the terminal includes a subscription indication related to a sensing assistance function. When determining that the subscription information of the terminal includes the subscription indication related to the sensing assistance function, the network side node responds the second message to the terminal based on the first message.

In an implementation, when the received first message is an initial registration message or a sensing registration message, the second message may be an initial registration acceptance message or a sensing registration acceptance message, for example, an initial registration acceptance message in a 5G system, or an initial registration acceptance message that carries a similar function in a 6G system.

In another implementation, when the received first message is a registration update message or a sensing registration update message, the second message may be a registration update acceptance message or a sensing registration update acceptance message, for example, a registration update acceptance message in a 5G system, or a registration update acceptance message or a location management update acceptance message that carries a similar function in a 6G system. The registration update acceptance message may be sent based on mobility or periodicity.

After receiving the second message, the terminal completes a registration process. If the registration succeeds, it is equivalent to completing a process of negotiating the sensing assistance function and configuring sensing assistance information with a network side, so that the terminal may serve as a network-authorized sensing assistance node, and assist a network to provide a high-precision sensing function service. The sensing assistance node may periodically or aperiodically perform a synchronization and configuration information update process of the sensing assistance function with the network side.

It can be learned from the technical solution provided in this embodiment of the present invention that, in this embodiment of this application, the network side node receives the first message from the terminal, where the first message is used to request to register the terminal as a sensing assistance node; and the network side node responds the second message to the terminal based on the first message, so that the terminal is registered as a network-authorized sensing assistance node. In this way, the sensing assistance node can perform configuration based on the received second message, and perform measurement and reporting work related to sensing assistance, further assisting a network to provide a high-precision sensing function service.

According to the foregoing embodiment, further, the first message and the second message are at least one of the following message types:
a non-access stratum (Non-Access Stratum, NAS) message; and
a sensing control layer message.

Further, when the first message and the second message are NAS messages, the network side node is a second node configured to implement an access and mobility management function. The second node may be an access and mobility management function (Access and Mobility Management Function, AMF) node in a 5G system, or a network function node that has a similar access and mobility management function in a 6G system. For simplicity, the following embodiments are illustrated by taking the second node as an AMF node as an example.

When the first message and the second message are sensing control layer messages, the network side node is a first node that implements a sensing control function, and may be named as a sensing control node. In this case, the second node may serve as a network function node between the terminal and the first node for implementing transparent transmission of the first message and the second message.

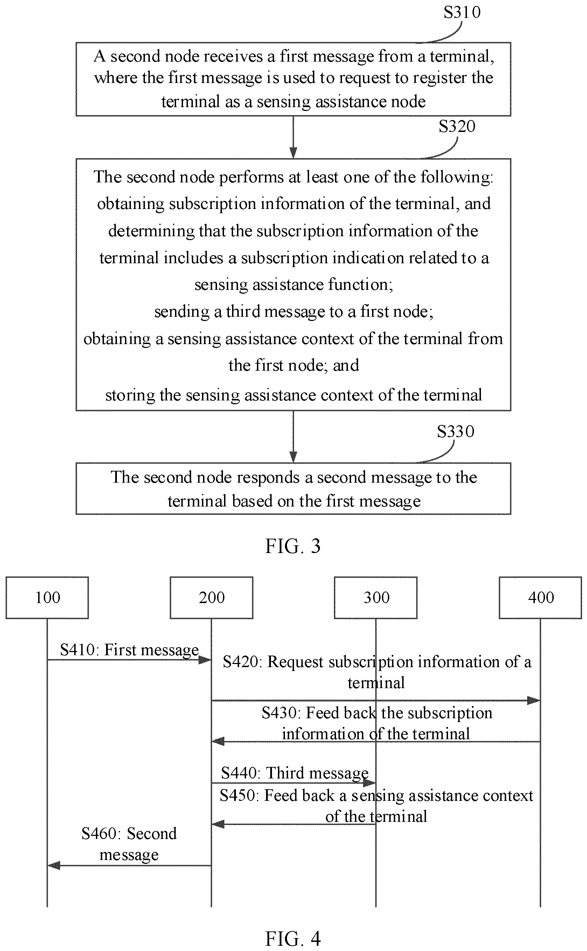

In an implementation, FIG. 3 is another schematic flowchart of a sensing assistance method according to an embodiment of this application when a first message and a second message are NAS messages. As shown in FIG. 3, the method includes the following steps.

Step S310: A second node receives the first message from a terminal, where the first message is used to request to register the terminal as a sensing assistance node.

The step S310 may implement a same method embodiment as the step S210 shown in FIG. 2, and obtain a same technical effect. A same part is not described herein again.

In an implementation, the first message includes at least one of the following:
an identifier of the terminal;
an indication indicating that the terminal supports a sensing assistance function;
an indication indicating a sensing service type supported by the terminal;
an indication indicating a sensing function type supported by the terminal or represented as an indication indicating a sensing algorithm type; and
synchronization information.

Each piece of the foregoing indication information may be represented in various forms in the first message. An implementation of the indication indicating that the terminal supports the sensing assistance function is to indicate, by using a capability indication bit (bit), that a terminal supports a sensing assistance function; and another implementation is to indicate, by indicating a registration type or an update type, that a current request registration initiated by the terminal is an initial registration or location update of a sensing assistance type.

The synchronization information may include at least one of the following information:
location synchronization information; and
time synchronization information, and the like.

Step S320: The second node performs at least one of the following:
obtaining subscription information of the terminal, and determining that the subscription information of the terminal includes a subscription indication related to a sensing assistance function;
sending a third message to a first node;
obtaining a sensing assistance context of the terminal from the first node; and
storing the sensing assistance context of the terminal.

It should be understood that the second node may obtain the subscription information of the terminal from a network function node that implements a data management entity. The network function node that implements the data management entity is a Unified Data Management (Unified Data Management, UDM) entity node in a 5G system, or is a network function node that implements a similar unified data management entity in a 6G system.

It should be understood that, after receiving the first message of the terminal, the second node sends the third message to the first node based on the first message, so that the first node responds the sensing assistance context (context) of the terminal based on the third message, and the second node responds the second message to the terminal based on the sensing assistance context.

In an implementation, the third message includes at least one of the following:
an identifier of the terminal;
an indication indicating that the terminal supports the sensing assistance function;
an indication indicating a sensing service type supported by the terminal;
an indication indicating a sensing function type supported by the terminal; and
synchronization information.

In an implementation, the sensing assistance context of the terminal includes at least one of the following:
an indication indicating a sensing service type supported by a network side;
configuration information of the sensing service type supported by the network side, where the sensing service type supported by the network side may be some or all of sensing service types supported and accepted by the network side node in sensing service types supported by the terminal, or a sensing service type supported by the network side node;
an indication indicating a sensing function type supported by the network side or represented as an indication indicating a sensing algorithm type supported by the network side, where the sensing function type or the sensing algorithm type supported by the network side may be some or all of sensing function types or sensing algorithm types supported and accepted by the network side node in sensing function types or sensing algorithm types supported by the terminal, or a sensing function type or a sensing algorithm type supported by the network side node;
configuration information of the sensing function type supported by the network side;
related information of the first node, where the first node is a node configured to implement a sensing control function; and the related information of the first node may include information, for example, an identifier, a location, a fully qualified domain name (Fully Qualified Domain Name, FQDN), an IP address, and the like of the first node;
synchronization information related to the sensing assistance function, where the synchronization information related to the sensing assistance function may include location synchronization information, time synchronization information, and the like; and the time synchronization information may be absolute time information; and
configuration information of a protocol data unit session (Protocol Data Unit session, PDU session) used for sensing, where the necessary configuration information of the protocol data unit session used for sensing may include at least one of the following:
   a data network name (Data Network Name, DNN); and
   a slice identifier (Slice ID).

It should be understood that the second node or the first node sends the sensing assistance context of the terminal to a network function node that implements a data management entity for storage. The network function node that implements the data management entity is a UDM node or a Unified Data Repository (Unified Data Repository, UDR) node in a 5G system, or is a network function node that implements a similar unified data management entity or a similar unified data repository in a 6G system.

Step S330: The second node responds the second message to the terminal based on the first message.

The step S330 may implement the method embodiment of the step S220 shown in FIG. 2, and obtain a same or similar technical effect. Repeated parts are not described herein again.

In an implementation, the second message includes at least one of the following:
an indication indicating a network sensing capability of the network side;
an indication indicating a sensing service type supported by the network side;
configuration information of the sensing service type supported by the network side;
an indication indicating a sensing function type supported by the network side;
configuration information of the sensing function type supported by the network side;
related information of the first node, where the first node is a node configured to implement the sensing control function;
synchronization information related to the sensing assistance function; and
configuration information of a protocol data unit session used for sensing.

Each piece of the foregoing indication information may be represented in various forms in the first message. An implementation of the indication indicating the network sensing capability is to indicate, by using a capability indication bit, that a network supports a sensing function; and another implementation is to indicate, by using an implicit indication, that the network side node accepts the initial registration or location update of the sensing assistance type in the first message, that is, to indicate that the network side supports the sensing function; otherwise, to indicate that the network side node rejects the initial registration or location update of the sensing assistance type.

It should be understood that the indication indicating the network sensing capability of the network side is used to indicate a network sensing capability of the network side node, whether a node configured to perform a network sensing function exists in the network, or the like.

It should be understood that, when the received first message includes the indication indicating the sensing service type supported by the terminal, the second message needs to include the indication indicating the sensing service type supported by the network side, and the configuration information of the corresponding sensing service type. The sensing service type supported by the network side may be some or all of sensing service types supported and accepted by the network side node in sensing service types supported by the terminal, or a sensing service type supported by the network side node.

It should be understood that, when the received first message includes the indication indicating the sensing function type or the sensing algorithm type supported by the terminal, the second message needs to include an indication indicating the sensing function type or a sensing algorithm type supported by the network side, and configuration information of the corresponding sensing function type or the corresponding sensing algorithm type. The sensing function type or the sensing algorithm type supported by the network side may be some or all of sensing function types or sensing algorithm types supported and accepted by the network side node in sensing function types or sensing algorithm types supported by the terminal, or a sensing function type or a sensing algorithm type supported by the network side node.

After receiving the second message sent by the second node, the terminal completes a registration process. If the registration succeeds, the terminal serves as a network-authorized sensing assistance function node.

As shown in FIG. 4, an embodiment of this application provides a specific implementation of a registration process based on a NAS message, including the following steps.

Step S410: A terminal 100 sends a first message to an AMF 200.

Step S420: The AMF 200 requests subscription information of the terminal 100 from a UDM 400.

Step S430: The UDM 400 feeds back the subscription information of the terminal 100 to the AMF 200.

Step S440: After determining that the terminal 100 has a subscription indication related to a sensing assistance function, the AMF 200 sends a third message to a sensing control node 300.

Step S450: The sensing control node 300 feeds back a sensing assistance context of the terminal 100 to the AMF 200.

Step S460: The AMF 200 feeds back a second message to the terminal 100.

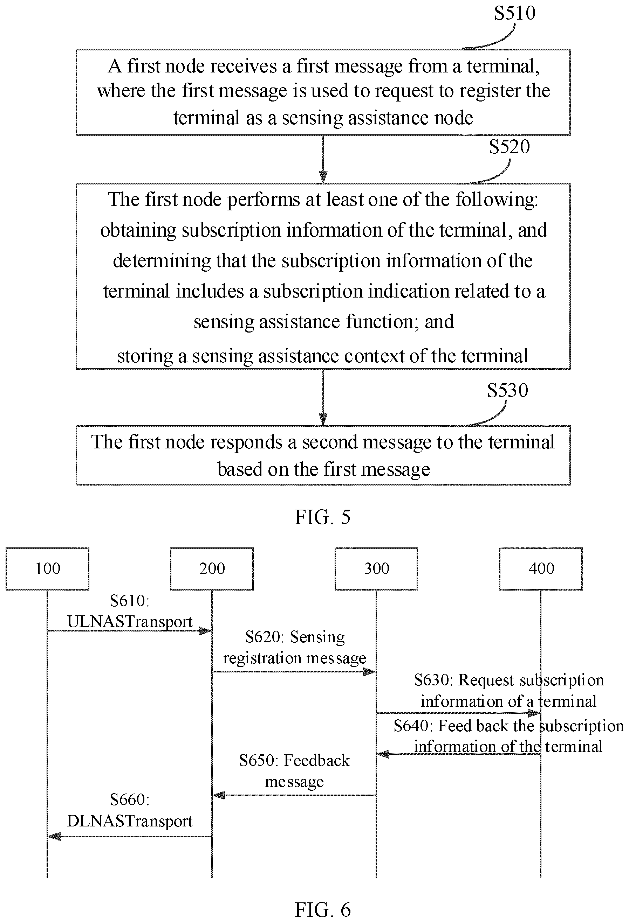

In another implementation, FIG. 5 is another schematic flowchart of a sensing assistance method according to an embodiment of this application when a first message and a second message are sensing control layer messages. As shown in FIG. 5, the method includes the following steps.

Step S510: A first node receives the first message from a terminal, where the first message is used to request to register the terminal as a sensing assistance node.

It should be understood that the first message may be transparently transmitted to the first node through a second node.

The step S510 may implement a same method embodiment as the step S210 shown in FIG. 2, and obtain a same technical effect. A same part is not described herein again.

In an implementation, the first message includes at least one of the following:
an identifier of the terminal;
an indication indicating that the terminal supports a sensing assistance function;
an indication indicating a sensing service type supported by the terminal;
an indication indicating a sensing function type supported by the terminal or represented as an indication indicating a sensing algorithm type; and
synchronization information.

Each piece of the foregoing indication information may be represented in various forms in the first message. An implementation of the indication indicating that the terminal supports the sensing assistance function is to indicate, by using a capability indication bit, that a terminal supports a sensing assistance function; and another implementation is to indicate, by indicating a registration type or an update type, that a current request registration initiated by the terminal is an initial registration or location update of a sensing assistance type.

The synchronization information may include at least one of the following information:
location synchronization information; and
time synchronization information, and the like.

Step S520: The first node performs at least one of the following:
obtaining subscription information of the terminal, and determining that the subscription information of the terminal includes a subscription indication related to the sensing assistance function; and
storing a sensing assistance context of the terminal.

It should be understood that the first node may obtain the subscription information of the terminal from a network function node that implements a data management entity. The network function node that implements the data management entity may be a UDM node in a 5G system, or may be a network function node that implements a similar unified data management entity in a 6G system.

In an implementation, the sensing assistance context of the terminal includes at least one of the following:
an indication indicating a sensing service type supported by a network side;
configuration information of the sensing service type supported by the network side, where the sensing service type supported by the network side may be some or all of sensing service types supported and accepted by a network side node in sensing service types supported by the terminal, or a sensing service type supported by a network side node;
an indication indicating a sensing function type supported by the network side or represented as an indication indicating a sensing algorithm type supported by the network side, where the sensing function type or the sensing algorithm type supported by the network side may be some or all of sensing function types or sensing algorithm types supported and accepted by the network side node in sensing function types or sensing algorithm types supported by the terminal, or a sensing function type or a sensing algorithm type supported by the network side node;
configuration information of the sensing function type supported by the network side;
related information of the first node, where the related information of the first node may include information, for example, an identifier, a location, an FQDN, an IP address, and the like of the first node;
synchronization information related to the sensing assistance function, where the synchronization information related to the sensing assistance function may include location synchronization information, time synchronization information, and the like; and the time synchronization information may be absolute time information; and
configuration information of a PDU session used for sensing, where the necessary configuration information of the protocol data unit session used for sensing may include at least one of the following:
   a DNN; and
   a slice ID.

It should be understood that the second node or the first node sends the sensing assistance context of the terminal to a network function node that implements a data management entity for storage. The network function node that implements the data management entity is a UDM node or a UDR node in a 5G system, or is a network function node that implements a similar unified data management entity or a similar unified data repository in a 6G system.

Step S530: The first node responds the second message to the terminal based on the first message.

It should be understood that the second message may be transparently transmitted to the terminal through the second node.

The step S530 may implement the method embodiment of the step S220 shown in FIG. 2, and obtain a same or similar technical effect. Repeated parts are not described herein again.

In an implementation, the second message includes at least one of the following:
an indication indicating a sensing service type supported by the network side;
configuration information of the sensing service type supported by the network side;
an indication indicating a sensing function type supported by the network side;
configuration information of the sensing function type supported by the network side;
synchronization information related to the sensing assistance function; and
configuration information of a protocol data unit session used for sensing.

Each piece of the foregoing indication information may be represented in various forms in the first message.

It should be understood that, when the received first message includes the indication indicating the sensing service type supported by the terminal, the second message needs to include the indication indicating the sensing service type supported by the network side, and the configuration information of the corresponding sensing service type. The sensing service type supported by the network side may be some or all of sensing service types supported and accepted by the network side node in sensing service types supported by the terminal, or a sensing service type supported by the network side node.

It should be understood that, when the received first message includes the indication indicating the sensing function type or the sensing algorithm type supported by the terminal, the second message needs to include an indication indicating the sensing function type or a sensing algorithm type supported by the network side, and configuration information of the corresponding sensing function type or the corresponding sensing algorithm type. The sensing function type or the sensing algorithm type supported by the network side may be some or all of sensing function types or sensing algorithm types supported and accepted by the network side node in sensing function types or sensing algorithm types supported by the terminal, or a sensing function type or a sensing algorithm type supported by the network side node.

After receiving the second message sent by the first node, the terminal completes a registration process. If the registration succeeds, the terminal serves as a network-authorized sensing assistance function node.

As shown in FIG. 6, an embodiment of this application provides a specific implementation of a registration process based on a sensing control layer message, including the following steps.

Step S610: A terminal 100 sends an uplink non-access stratum transport (ULNASTransport) message to an AMF 200, where a sensing registration message serving as a first message is encapsulated in the ULNASTransport message.

Step S620: The AMF 200 sends the sensing registration message to a sensing control node 300.

Step S630: The sensing control node 300 requests subscription information of the terminal 100 from a UDM 400.

Step S640: The UDM 400 feeds back the subscription information of the terminal 100 to the sensing control node 300, and the sensing control node 300 determines that the terminal 100 has a subscription indication related to a sensing assistance function.

Step S650: The sensing control node 300 sends a feedback message to the AMF 200, where the feedback message includes a sensing registration acceptance message that serves as a second message and that needs to be forwarded to the terminal 100.

Step S660: The AMF 200 encapsulates the sensing registration acceptance message into a downlink non-access stratum transport (DLNASTransport) message and sends the DLNASTransport message to the terminal 100.

It can be learned from the technical solutions provided in the embodiments of the present invention that, in the embodiments of this application, the registration process of the sensing assistance function of the terminal is separately implemented based on the NAS message or the sensing control layer message, so that the registration process can adapt to more application scenarios, and the terminal is registered as a network-authorized sensing assistance node in a more reasonable manner, and assists a network to provide a high-precision sensing function service.

It should be noted that an execution body of the sensing assistance method provided in the embodiments of this application may be a sensing assistance apparatus, or a control module that is in the sensing assistance apparatus and that is used for executing the sensing assistance method. In the embodiments of this application, an example in which the sensing assistance apparatus performs the sensing assistance method is used to describe the sensing assistance apparatus provided in the embodiments of this application.

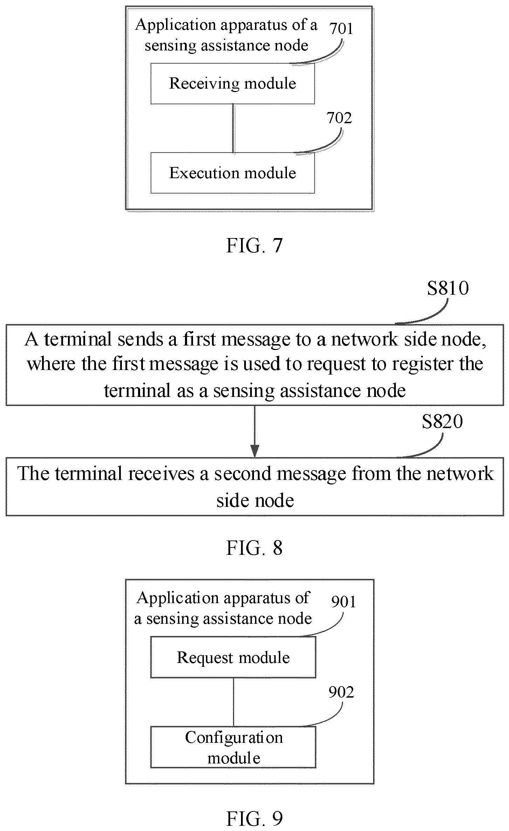

As shown in FIG. 7, the sensing assistance apparatus may include a receiving module 701 and an execution module 702.

The receiving module 701 is configured to receive a first message from a terminal, where the first message is used to request to register the terminal as a sensing assistance node; and the execution module 702 is configured to respond a second message to the terminal based on the first message.

Further, when determining that subscription information of the terminal includes a subscription indication related to a sensing assistance function, the execution module 702 is configured to respond the second message to the terminal based on the first message.

Further, the first message is an initial registration message or a registration update message.

It can be learned from the technical solution provided in this embodiment of the present invention that, in this embodiment of this application, the first message is received from the terminal, where the first message is used to request to register the terminal as a sensing assistance node; and the second message is responded to the terminal based on the first message, so that the terminal is registered as a network-authorized sensing assistance node. In this way, the sensing assistance node can perform configuration based on the received second message, and perform measurement and reporting work related to sensing assistance, further assisting a network to provide a high-precision sensing function service.

According to the foregoing embodiment, further, the first message and the second message are at least one of the following message types:
a non-access stratum message; and
a sensing control layer message.

Further, when the first message and the second message are non-access stratum messages, the sensing assistance apparatus is a second node configured to implement an access and mobility management function.

When the first message and the second message are sensing control layer messages, the sensing assistance apparatus is a first node that implements a sensing control function.

Further, the first message includes at least one of the following:
an identifier of the terminal;
an indication indicating that the terminal supports the sensing assistance function;
an indication indicating a sensing service type supported by the terminal;
an indication indicating a sensing function type supported by the terminal; and
synchronization information.

Further, the second message includes at least one of the following:
an indication indicating a network sensing capability of a network side;
an indication indicating a sensing service type supported by the network side;
configuration information of the sensing service type supported by the network side;
an indication indicating a sensing function type supported by the network side;
configuration information of the sensing function type supported by the network side;
related information of the first node, where the first node is a node configured to implement the sensing control function;
synchronization information related to the sensing assistance function; and
configuration information of a protocol data unit session used for sensing.

Further, the execution module is further configured to perform at least one of the following:
obtaining the subscription information of the terminal, and determining that the subscription information of the terminal includes the subscription indication related to the sensing assistance function; and
storing a sensing assistance context of the terminal.

Further, when the first message and the second message are non-access stratum messages, the execution module is further configured to perform at least one of the following:
sending a third message to the first node; and
obtaining the sensing assistance context of the terminal from the first node.

The third message includes at least one of the following:
an identifier of the terminal;
an indication indicating that the terminal supports a sensing assistance function;
an indication indicating a sensing service type supported by the terminal;
an indication indicating a sensing function type supported by the terminal; and
synchronization information.

Further, the sensing assistance context of the terminal includes at least one of the following:
an indication indicating a sensing service type supported by the network side;
configuration information of the sensing service type supported by the network side;
an indication indicating a sensing function type supported by the network side;
configuration information of the sensing function type supported by the network side;
related information of the first node, where the first node is a node configured to implement the sensing control function;
synchronization information related to the sensing assistance function; and
configuration information of a protocol data unit session used for sensing.

Further, the configuration information of the protocol data unit session used for sensing includes at least one of the following:
a data network name; and
a slice identifier.

It can be learned from the technical solution provided in this embodiment of the present invention that, in this embodiment of this application, a registration process of the sensing assistance function of the terminal is separately implemented based on the NAS message or the sensing control layer message, so that the registration process can adapt to more application scenarios, and the terminal is registered as a network-authorized sensing assistance node in a more reasonable manner, and assists a network to provide a high-precision sensing function service.

The sensing assistance apparatus in this embodiment of this application may be an apparatus, or an apparatus or electronic device with an operating system, or may be a component, an integrated circuit, or a chip in a terminal. The apparatus or electronic device may be a mobile terminal, or a non-mobile terminal. For example, the mobile terminal may include but be not limited to the types of the terminal 11 listed above, and the non-mobile terminal may be a server, a network attached storage (Network Attached Storage, NAS), a personal computer (personal computer, PC), a television (television, TV), an automated teller machine, a self-service machine, or the like. This is not specifically limited in the embodiments of this application.

The sensing assistance apparatus provided in the embodiments of this application can implement the processes implemented in the method embodiments in FIG. 1 to FIG. 6, and achieve a same technical effect. To avoid repetition, details are not described herein again.

FIG. 8 is another schematic flowchart of a sensing assistance method according to an embodiment of this application. As shown in FIG. 8, an execution body of the method is a terminal. The method is implemented by the following steps.

Step S810: The terminal sends a first message to a network side node, where the first message is used to request to register the terminal as a sensing assistance node.

Further, the step S810 includes:
When the terminal is not registered as a sensing assistance node, the terminal sends an initial registration message to the network side node; and
when the terminal has been registered as a sensing assistance node, the terminal sends a registration update message to the network side node.

Step S820: The terminal receives a second message from the network side node.

The steps S810 and S820 may implement the method embodiment of the steps S210 and S220 shown in FIG. 2, and obtain a same or similar technical effect. Repeated parts are not described herein again.

It can be learned from the technical solution provided in this embodiment of the present invention that, in this embodiment of this application, the terminal sends the first message to the network side node, where the first message is used to request to register the terminal as a sensing assistance node; and the terminal receives the second message from the network side node, so that the terminal is registered as a network-authorized sensing assistance node. In this way, the sensing assistance node can perform configuration based on the received second message, and perform measurement and reporting work related to sensing assistance, further assisting a network to provide a high-precision sensing function service.

According to the foregoing embodiment, further, the first message and the second message are at least one of the following message types:
a NAS message; and
a sensing control layer message.

Further, when the first message and the second message are non-access stratum messages, the network side node is a second node configured to implement an access and mobility management function.

When the first message and the second message are sensing control layer messages, the network side node is a first node that implements a sensing control function.

Further, the first message includes at least one of the following:
an identifier of the terminal;
an indication indicating that the terminal supports a sensing assistance function;
an indication indicating a sensing service type supported by the terminal;
an indication indicating a sensing function type supported by the terminal; and
synchronization information.

Further, the second message includes at least one of the following:
an indication indicating a network sensing capability of a network side;
an indication indicating a sensing service type supported by the network side;
configuration information of the sensing service type supported by the network side;
an indication indicating a sensing function type supported by the network side;
configuration information of the sensing function type supported by the network side;
related information of the first node, where the first node is a node configured to implement the sensing control function;
synchronization information related to the sensing assistance function; and
configuration information of a protocol data unit session used for sensing.

Further, the configuration information of the protocol data unit session used for sensing includes:
a data network name; and
a slice identifier.

The foregoing steps may implement the method embodiments of the steps shown in FIG. 3 to FIG. 6, and obtain a same or similar technical effect. Repeated parts are not described herein again.

It can be learned from the technical solution provided in this embodiment of the present invention that, in this embodiment of this application, a registration process of the sensing assistance function of the terminal is separately implemented based on the NAS message or the sensing control layer message, so that the registration process can adapt to more application scenarios, and the terminal is registered as a network-authorized sensing assistance node in a more reasonable manner, and assists a network to provide a high-precision sensing function service.

It should be noted that an execution body of the sensing assistance method provided in this embodiment of this application may be a sensing assistance apparatus, or a control module that is in the sensing assistance apparatus and that is used for executing the sensing assistance method. In this embodiment of this application, an example in which the sensing assistance apparatus performs the sensing assistance method is used to describe the sensing assistance apparatus provided in this embodiment of this application.

As shown in FIG. 9, the sensing assistance apparatus further includes a request module 901 and a configuration module 902.

The request module 901 is configured to send a first message to a network side node, where the first message is used to request to register a terminal as a sensing assistance node; and the configuration module 902 is configured to receive a second message responded by the network side node.

Further, the request module 901 is configured to:
when the terminal is not registered as a sensing assistance node, send an initial registration message to the network side node; and
when the terminal has been registered as a sensing assistance node, send a registration update message to the network side node.

It can be learned from the technical solution provided in this embodiment of the present invention that, in this embodiment of this application, the first message is sent to the network side node, where the first message is used to request to register the terminal as a sensing assistance node; and the second message responded by the network side node is received, so that the terminal is registered as a network-authorized sensing assistance node. In this way, the sensing assistance node can perform configuration based on the received second message, and perform measurement and reporting work related to sensing assistance, further assisting a network to provide a high-precision sensing function service.

According to the foregoing embodiment, further, the first message and the second message are at least one of the following message types:
a NAS message; and
a sensing control layer message.

Further, when the first message and the second message are non-access stratum messages, the network side node is a second node configured to implement an access and mobility management function.

When the first message and the second message are sensing control layer messages, the network side node is a first node that implements a sensing control function.

Further, the first message includes at least one of the following:
an identifier of the terminal;
an indication indicating that the terminal supports a sensing assistance function;
an indication indicating a sensing service type supported by the terminal;
an indication indicating a sensing function type supported by the terminal; and
synchronization information.

Further, the second message includes at least one of the following:
an indication indicating a network sensing capability of a network side;
an indication indicating a sensing service type supported by the network side;
configuration information of the sensing service type supported by the network side;
an indication indicating a sensing function type supported by the network side;
configuration information of the sensing function type supported by the network side;
related information of the first node, where the first node is a node configured to implement the sensing control function;
synchronization information related to the sensing assistance function; and
configuration information of a protocol data unit session used for sensing.

Further, the configuration information of the protocol data unit session used for sensing includes:
a data network name; and
a slice identifier.

It can be learned from the technical solution provided in this embodiment of the present invention that, in this embodiment of this application, a registration process of the sensing assistance function is separately implemented based on the NAS message or the sensing control layer message, so that the registration process can adapt to more application scenarios, and the terminal is registered as a network-authorized sensing assistance node in a more reasonable manner, and assists a network to provide a high-precision sensing function service.

The sensing assistance apparatus in this embodiment of this application may be an apparatus, or an apparatus or electronic device with an operating system, or may be a component, an integrated circuit, or a chip in a terminal. The apparatus or electronic device may be a mobile terminal, or a non-mobile terminal. For example, the mobile terminal may include but be not limited to the types of the terminal 11 listed above, and the non-mobile terminal may be a server, a network attached storage (Network Attached Storage, NAS), a personal computer (personal computer, PC), a television (television, TV), an automated teller machine, a self-service machine, or the like. This is not specifically limited in the embodiments of this application.

The sensing assistance apparatus provided in this embodiment of this application can implement the processes implemented in the method embodiment in FIG. 7 and achieve a same technical effect. To avoid repetition, details are not described herein again.

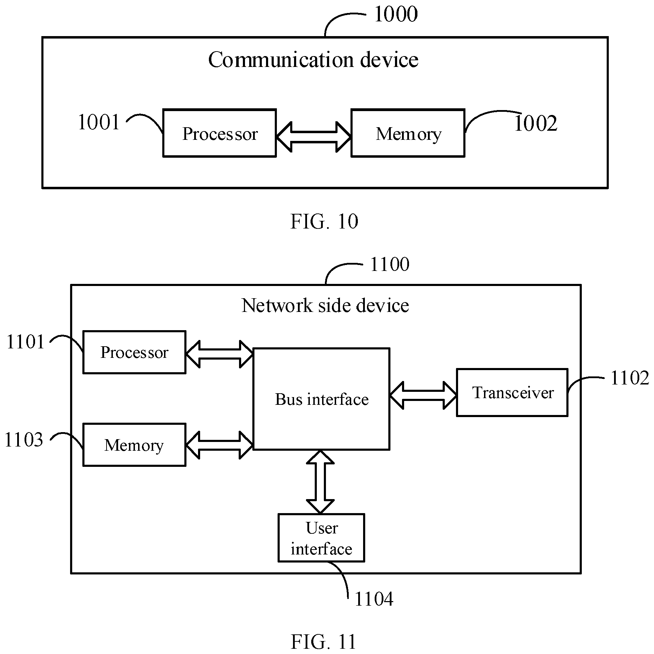

Optionally, as shown in FIG. 10, an embodiment of this application further provides a communication device 1000, including a processor 1001, a memory 1002, and a program or an instruction stored in the memory 1002 and executable on the processor 1001. For example, when the communication device 1000 is a terminal and the program or the instruction is executed by the processor 1001, the processes in the foregoing sensing assistance method embodiments are implemented, and a same technical effect is achieved. When the communication device 1000 is a network side device and the program or the instruction is executed by the processor 1001, the processes in the foregoing sensing assistance method embodiments are implemented, and a same technical effect is achieved. To avoid repetition, details are not described herein again.

An embodiment of this application further provides a network side device, including a processor and a communication interface. The processor is configured to determine a second message. The communication interface is configured to: receive a first message from a terminal, where the first message is used to request to register the terminal as a sensing assistance node; and respond a second message to the terminal based on the first message. The network side device embodiment corresponds to the foregoing method embodiment of the network side device. Each implementation process and implementation of the foregoing method embodiment may be applicable to the network side device embodiment, and a same technical effect can be achieved.

Specifically, an embodiment of this application further provides a network side device. As shown in FIG. 11, the network device 1100 includes a processor 1101, a transceiver 1102, a memory 1103, a user interface 1104, and a bus interface.

In this embodiment of the present invention, the network side device 1100 further includes a computer program stored in the memory 1103 and executable on the processor 1101. When the computer program is executed by the processor 1101, the method executed by the modules shown in FIG. 7 is implemented, and a same technical effect is achieved. To avoid repetition, details are not described herein again.

In FIG. 11, a bus architecture may include any quantity of interconnected buses and bridges, which are specifically linked together by various circuits of one or more processors represented by the processor 1101 and a memory represented by the memory 1103. The bus architecture may further link various other circuits together such as a peripheral device, a voltage regulator, and a power management circuit. These are all well-known in the art, and therefore are not further described in this specification. The bus interface provides an interface. The transceiver 1102 may be a plurality of elements, in other words, includes a transmitter and a receiver, and provides a unit configured to communicate with various other apparatuses on a transmission medium. For different user equipment, the user interface 1104 may further be an interface that can be externally or internally connected to a required device. The connected device includes but is not limited to a keypad, a display, a speaker, a microphone, a joystick, and the like.

The processor 1101 is responsible for managing the bus architecture and common processing, and the memory 1103 may store data used when the processor 1101 performs an operation.

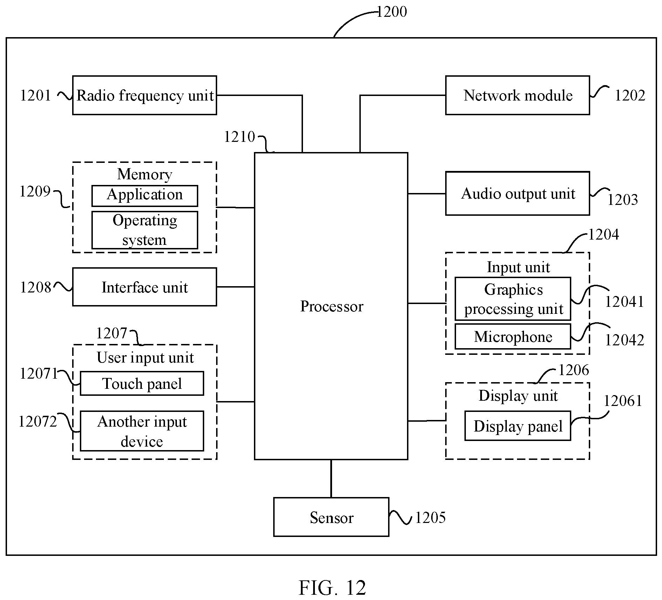

An embodiment of this application further provides a terminal, including a processor and a communication interface. The processor is configured to receive a second message responded by a network side node, and the communication interface is configured to send a first message to the network side node, where the first message is used to request to register the terminal as a sensing assistance node. The terminal embodiment corresponds to the foregoing method embodiment of the terminal side. Each implementation process and implementation of the foregoing method embodiment may be applicable to the terminal embodiment, and a same technical effect can be achieved. Specifically, FIG. 12 is a schematic diagram of a hardware structure of a terminal according to an embodiment of this application.

The terminal 1200 includes but is not limited to at least some of components such as a radio frequency unit 1201, a network module 1202, an audio output unit 1203, an input unit 1204, a sensor 1205, a display unit 1206, a user input unit 1207, an interface unit 1208, a memory 1209, and a processor 1120.

A person skilled in the art can understand that the terminal 1200 may further include a power supply (such as a battery) that supplies power to each component. The power supply may be logically connected to the processor 1120 by using a power supply management system, to implement functions such as charging and discharging management, and power consumption management by using the power supply management system. The terminal structure shown in FIG. 12 constitutes no limitation on the terminal, and the terminal may include more or fewer components than those shown in the figure, or combine some components, or have different component arrangements. Details are not described herein.

It should be understood that, in this embodiment of this application, the input unit 1204 may include a graphics processing unit (Graphics Processing Unit, GPU) 12041 and a microphone 12042, and the graphics processing unit 12041 processes image data of a still picture or a video obtained by an image capture apparatus (such as a camera) in a video capture mode or an image capture mode. The display unit 1206 may include a display panel 12061. Optionally, the display panel 12061 may be configured in a form such as a liquid crystal display or an organic light-emitting diode. The user input unit 1207 includes a touch panel 12071 and another input device 12072. The touch panel 12071 is also referred to as a touchscreen. The touch panel 12071 may include two parts: a touch detection apparatus and a touch controller. The another input device 12072 may include but be not limited to a physical keyboard, a functional button (such as a volume control button or a power on/off button), a trackball, a mouse, and a joystick. Details are not described herein.

In this embodiment of this application, the radio frequency unit 1201 receives downlink data from a network side device and then sends the downlink data to the processor 1120 for processing; and sends uplink data to the network side device. Usually, the radio frequency unit 1201 includes but is not limited to an antenna, at least one amplifier, a transceiver, a coupler, a low noise amplifier, a duplexer, and the like.

The memory 1209 may be configured to store a software program or an instruction and various data. The memory 1209 may mainly include a program or instruction storage area and a data storage area. The program or instruction storage area may store an operating system, and an application or an instruction required by at least one function (for example, a sound playing function or an image playing function). In addition, the memory 1209 may include a high-speed random access memory and a non-transitory memory. The non-transitory memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-transitory solid-state storage component.

The processor 1120 may include one or more processing units. Optionally, an application processor and a modem processor may be integrated into the processor 1120. The application processor mainly processes an operating system, a user interface, an application, an instruction, or the like. The modem processor mainly processes wireless communication, for example, a baseband processor. It can be understood that, alternatively, the modem processor may not be integrated into the processor 1120.

The radio frequency unit 1201 is configured to send a first message to a network side node, where the first message is used to request to register the terminal as a sensing assistance node.

The radio frequency unit 1201 is further configured to receive a second message responded by the network side node.

The processor 1120 is configured to perform configuration based on the second message.

Further, the radio frequency unit 1201 is configured to:
when the terminal is not registered as a sensing assistance node, send an initial registration message to the network side node; and
when the terminal has been registered as a sensing assistance node, send a registration update message to the network side node.

It can be learned from the technical solution provided in this embodiment of the present invention that, in this embodiment of this application, the first message is sent to the network side node, where the first message is used to request to register the terminal as a sensing assistance node; and the second message responded by the network side node is received, so that the terminal is registered as a network-authorized sensing assistance node. In this way, the sensing assistance node can perform configuration based on the received second message, and perform measurement and reporting work related to sensing assistance, further assisting a network to provide a high-precision sensing function service.

Further, the first message and the second message are at least one of the following message types:
a NAS message; and
a sensing control layer message.

Further, when the first message and the second message are non-access stratum messages, the network side node is a second node configured to implement an access and mobility management function.

When the first message and the second message are sensing control layer messages, the network side node is a first node that implements a sensing control function.

Further, the first message includes at least one of the following:
an identifier of the terminal;
an indication indicating that the terminal supports a sensing assistance function;
an indication indicating a sensing service type supported by the terminal;
an indication indicating a sensing function type supported by the terminal; and
synchronization information.

Further, the second message includes at least one of the following:
an indication indicating a network sensing capability of a network side;
an indication indicating a sensing service type supported by the network side;
configuration information of the sensing service type supported by the network side;
an indication indicating a sensing function type supported by the network side;
configuration information of the sensing function type supported by the network side;
related information of the first node, where the first node is a node configured to implement the sensing control function;
synchronization information related to the sensing assistance function; and
configuration information of a protocol data unit session used for sensing.

Further, the configuration information of the protocol data unit session used for sensing includes:
a data network name; and
a slice identifier.

It can be learned from the technical solutions provided in this embodiment of the present invention that, in this embodiment of this application, a registration process of the sensing assistance function is separately implemented based on the NAS message or the sensing control layer message, so that the registration process can adapt to more application scenarios, and the terminal is registered as a network-authorized sensing assistance node in a more reasonable manner, and assists a network to provide a high-precision sensing function service.

An embodiment of this application further provides a readable storage medium. The readable storage medium stores a program or an instruction. When the program or the instruction is executed by a processor, the processes in the foregoing sensing assistance method embodiments are implemented, and a same technical effect is achieved. To avoid repetition, details are not described herein again.

The processor is a processor in the terminal in the foregoing embodiments. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or an instruction, to implement the processes in the foregoing sensing assistance method embodiments, and achieve a same technical effect. To avoid repetition, details are not described herein again.

It should be understood that the chip mentioned in this embodiment of this application may also be referred to as a system-level chip, a system chip, a chip system, an on-chip system chip, or the like.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiments may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A sensing assistance method, comprising:
receiving, by a network side node, a first message from a terminal side, wherein the first message is used to request to register the terminal as a sensing assistance node; and
responding, by the network side node, a second message to the terminal based on the first message.

2. The method according to claim 1, wherein the responding, by the network side node, a second message to the terminal based on the first message comprises:
when determining that subscription information of the terminal comprises a subscription indication related to a sensing assistance function, responding, by the network side node, the second message to the terminal based on the first message.

3. The method according to claim 1 or 2, wherein the first message is an initial registration message or a registration update message.

4. The method according to claim 1 or 2, wherein the first message comprises at least one of the following:
an identifier of the terminal;
an indication indicating that the terminal supports the sensing assistance function ;
an indication indicating a sensing service type supported by the terminal;
an indication indicating a sensing function type supported by the terminal; and
synchronization information.

5. The method according to claim 4, wherein the second message comprises at least one of the following:
an indication indicating a network sensing capability of a network side;
an indication indicating a sensing service type supported by the network side;
configuration information of the sensing service type supported by the network side;
an indication indicating a sensing function type supported by the network side;
configuration information of the sensing function type supported by the network side;
related information of a first node, wherein the first node is a node configured to implement a sensing control function;
synchronization information related to the sensing assistance function; and
configuration information of a protocol data unit session used for sensing.

6. The method according to claim 1 or 2, wherein before the responding a second message to the terminal based on the first message, the method further comprises:
performing, by the network side node, at least one of the following:
obtaining the subscription information of the terminal, and determining whether the subscription information of the terminal comprises the subscription indication related to the sensing assistance function; and
storing a sensing assistance context of the terminal.

7. The method according to claim 1 or 2, wherein the first message and the second message are at least one of the following message types:
a non-access stratum message; and
a sensing control layer message.

8. The method according to claim 7, wherein when the first message and the second message are non-access stratum messages, the network side node is a second node configured to implement an access and mobility management function;
or
when the first message and the second message are sensing control layer messages, the network side node is a first node that implements a sensing control function.

9. The method according to claim 7, wherein when the first message and the second message are non-access stratum messages, before the responding a second message to the terminal based on the first message, the method further comprises:
performing, by a second node, at least one of the following:
sending a third message to a first node; and
obtaining a sensing assistance context of the terminal from the first node, wherein
the third message comprises at least one of the following:
an identifier of the terminal;
an indication indicating that the terminal supports the sensing assistance function;
an indication indicating a sensing service type supported by the terminal;
an indication indicating a sensing function type supported by the terminal; and
synchronization information.

10. The method according to claim 5, wherein the sensing assistance context of the terminal comprises at least one of the following:
an indication indicating a sensing service type supported by the network side;
configuration information of the sensing service type supported by the network side;
an indication indicating a sensing function type supported by the network side;
configuration information of the sensing function type supported by the network side;
related information of a first node, wherein the first node is a node configured to implement a sensing control function;
synchronization information related to the sensing assistance function; and
configuration information of a protocol data unit session used for sensing.

11. The method according to claim 4, wherein the configuration information of the protocol data unit session used for sensing comprises at least one of the following:
a data network name; and a slice identifier.

12. A sensing assistance apparatus, comprising:
a receiving module, configured to receive a first message from a terminal, wherein the first message is used to request to register the terminal as a sensing assistance node; and
an execution module, configured to respond a second message to the terminal based on the first message.

13. A sensing assistance method, comprising:
sending, by a terminal, a first message to a network side node, wherein the first message is used to request to register the terminal as a sensing assistance node; and
receiving, by the terminal, a second message from the network side node.

14. The method according to claim 13, wherein the sending, by a terminal, a first message to a network side node comprises:
when the terminal is not registered as the sensing assistance node, sending, by the terminal, an initial registration message to the network side node; and
when the terminal has been registered as the sensing assistance node, sending, by the terminal, a registration update message to the network side node.

15. The method according to claim 13, wherein the first message comprises at least one of the following:
an identifier of the terminal;
an indication indicating that the terminal supports a sensing assistance function;
an indication indicating a sensing service type supported by the terminal;
an indication indicating a sensing function type supported by the terminal; and
synchronization information.

16. The method according to claim 15, wherein the second message comprises at least one of the following:
an indication indicating a network sensing capability of a network side;
an indication indicating a sensing service type supported by the network side;
configuration information of the sensing service type supported by the network side;
an indication indicating a sensing function type supported by the network side;
configuration information of the sensing function type supported by the network side;
related information of a first node, wherein the first node is a node configured to implement a sensing control function;
synchronization information related to the sensing assistance function; and
configuration information of a protocol data unit session used for sensing.

17. The method according to claim 13, wherein the first message and the second message are at least one of the following message types:
a non-access stratum message; and a sensing control layer message.

18. The method according to claim 17, wherein when the first message and the second message are non-access stratum messages, the network side node is a second node configured to implement an access and mobility management function; and
when the first message and the second message are sensing control layer messages, the network side node is a first node that implements a sensing control function.

19. The method according to claim 16, wherein the configuration information of the protocol data unit session used for sensing comprises:
a data network name; and
a slice identifier.

20. A sensing assistance apparatus, comprising:
a request module, configured to send a first message to a network side node, wherein the first message is used to request to register a terminal as a sensing assistance node; and
a configuration module, configured to receive a second message responded by the network side node.

21. A network side device, comprising a processor, a memory, and a program or an instruction stored in the memory and executable on the processor, wherein when the program or the instruction is executed by the processor, steps of the sensing assistance method according to any one of claims 1 to 11 are implemented.

22. A terminal, comprising a processor, a memory, and a program or an instruction stored in the memory and executable on the processor, wherein when the program or the instruction is executed by the processor, steps of the sensing assistance method according to any one of claims 13 to 19 are implemented.

23. A readable storage medium, wherein the readable storage medium stores a program or an instruction, and when the program or the instruction is executed by a processor, steps of the sensing assistance method according to any one of claims 1 to 11 are implemented, or steps of the sensing assistance method according to any one of claims 13 to 19 are implemented.
